# FASCICULE DE BREVET EUROPEEN

(11) **EP 1 665 661 B1**
(45) Date de publication et mention de la délivrance du brevet: **28.03.2007**
(21) Numéro de dépôt: 04786268.5
(22) Date de dépôt: 05.08.2004
(51) Int. Cl.: H04L 12/56, H04Q 7/38

(54) **PROCEDE DE DIFFERENCIATION DE LA QUALITE DE SERVICE DANS LES RESEAUX DE COMMUNICATION MOBILE EN MODE PAQUETS**
VERFAHREN ZUR DIENSTQUALITÄTSDIFFERENZIERUNG IN PAKETMODUS-MOBILKOMMUNIKATIONSNETZEN
METHOD FOR QUALITY OF SERVICE DIFFERENTIATION IN PACKET-MODE MOBILE COMMUNICATION NETWORKS

(30) Priorité: 11.09.2003 FR 0310709
(43) Date de publication de la demande: 07.06.2006
(73) Titulaire: FRANCE TELECOM, 75015 Paris (FR)
(72) Inventeur: BEZIOT, Nathalie, F-92350 Le Plessis Robinson (FR); DRONNE, François, F-92330 Sceaux (FR)
(74) Mandataire: Bentz, Jean-Paul
(86) Numéro de dépôt international: PCT/FR2004/002095
(87) Numéro de publication internationale: WO 2005/029787

(56) Documents cités:
- WO-A-02/03622
- WO-A-02/052869
- US-B1- 6 564 061
- GUO Y ET AL: "CLASS-BASED QUALITY OF SERVICE OVER AIR INTERFACES IN 4G MOBILE NETWORKS" IEEE COMMUNICATIONS MAGAZINE, IEEE SERVICE CENTER. PISCATAWAY, N.J, US, vol. 40, no. 3, mars 2002 (2002-03), pages 132-137, XP001102615 ISSN: 0163-6804

## Description

L'invention concerne de manière générale le domaine des télécommunications et concerne plus particulièrement un procédé pour différencier la qualité de service dans le cadre des réseaux de communication mobile utilisant la commutation de paquets.

Dans un tel contexte, par qualité de service, on entend l'aptitude d'un service proposé par un opérateur d'un réseau de communication mobile à répondre de façon adéquate à des exigences visant à satisfaire ses abonnés, notamment en terme d'optimisation des ressources réseau.

Le procédé selon l'invention est prévu pour s'appliquer aux réseaux mobiles utilisant la technologie GPRS ou UMTS, normalisées dans le cadre de la norme 3GPP. Dans un souci de ne pas surcharger la description, un glossaire comprenant la définition de l'ensemble des acronymes utilisés ci-après est prévu à la fin de la description, où le lecteur pourra utilement se reporter.

La norme GPRS spécifie un nouveau service support de transmission de données en mode paquet sur GSM et permet d'offrir aux abonnés d'un opérateur mobile un accès à des services basés sur IP (par exemple, messagerie électronique, téléchargement de fichiers, consultation de sites Web ou WAP, etc...). Des données (transmises dans des paquets IP) peuvent donc être échangées entre des serveurs appartenant à un réseau extérieur au réseau GPRS, typiquement le réseau Internet, et le téléphone mobile.

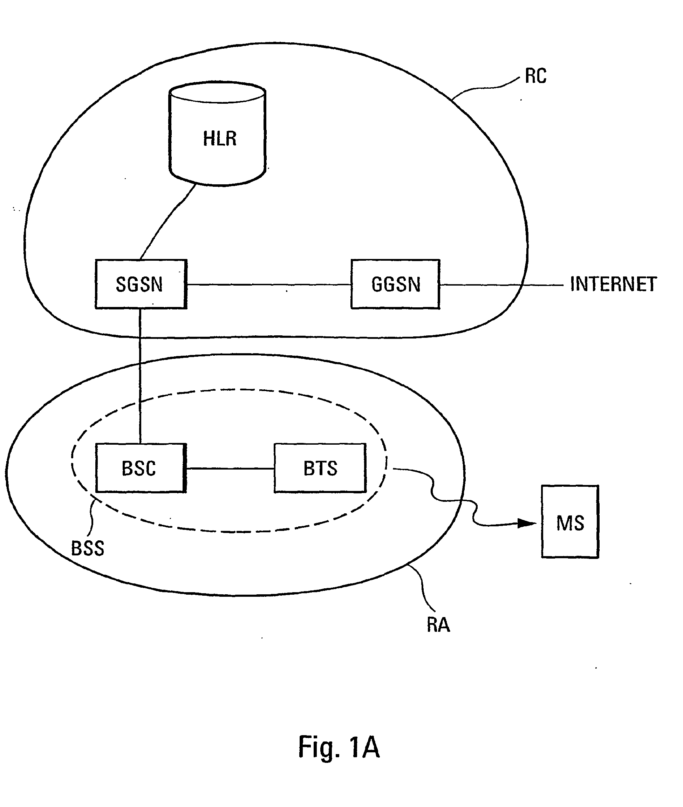

Pour cela, un canal radio est établi entre le téléphone mobile et le réseau d'accès radio, puis le flux de données est routé au sein du réseau coeur. Ainsi, en terme d'architecture, le réseau GPRS se compose de deux parties principales montrées à la figure 1A: le réseau coeur RC, regroupant les éléments de réseau liés au routage des paquets, et le réseau d'accès RA, établissant le lien radio avec les téléphones mobiles MS.

Le réseau d'accès RA regroupe les entités station de base BTS et contrôleur de station de base BSC. Cet ensemble, appelé sous-système radio BSS, gère les ressources radio du réseau de téléphonie cellulaire de type GSM à l'aide des stations de base et des contrôleurs de station de base. Le rôle du BSS est plus particulièrement de gérer l'établissement d'un canal radio avec le mobile MS et il est prévu également pour stocker les informations de qualité de service relatives à un transfert de données demandé par le mobile.

Le réseau coeur RC est quant à lui constitué des éléments de réseau suivants:
- le HLR, qui est une base de données contenant le profil de l'ensemble des abonnés d'un réseau et à partir de laquelle s'effectue la gestion des abonnés mobiles. Il contient entre autres, les informations de qualité de service liées aux abonnés et aux services.
- le SGSN, qui est un noeud de service du réseau assurant la gestion du lien de communication avec le réseau d'accès. Il stocke le profil de l'abonné et effectue un contrôle des ressources réseaux demandées par l'abonné.
- le GGSN, qui est un noeud de service du réseau servant de passerelle pour assurer l'interconnexion avec un réseau externe, typiquement le réseau Internet.

Le réseau coeur GPRS est donc interconnecté avec l'extérieur via une passerelle, le noeud de service GGSN, qui contient les informations de routage permettant au mobile de communiquer avec un réseau externe, notamment le réseau Internet, tout en assurant la sécurité. Pour pouvoir envoyer les informations au mobile, le GGSN utilise alors un autre noeud de service, le SGSN, qui gère la mobilité, notamment l'authentification, le chiffrement et le suivi du mobile quand il se déplace. Ces éléments de réseau intègrent des fonctions de routeur IP et constituent un réseau de type réseau IP.

En ce qui concerne le standard de téléphonie mobile UMTS, il peut être vu comme une extension du réseau GPRS tel qu'il vient d'être défini et a été conçu pour apporter une meilleure satisfaction, notamment en terme de débit, pour l'acheminement de communications multimédia (accès à Internet, visioconférence, jeux vidéos, échanges instantanés de type forum multimédia). A l'heure actuelle, l'UMTS et le GPRS sont phasés en différentes versions ou "releases", et notamment la version dénommée Release 99, à laquelle la description qui va suivre fait plus particulièrement référence.

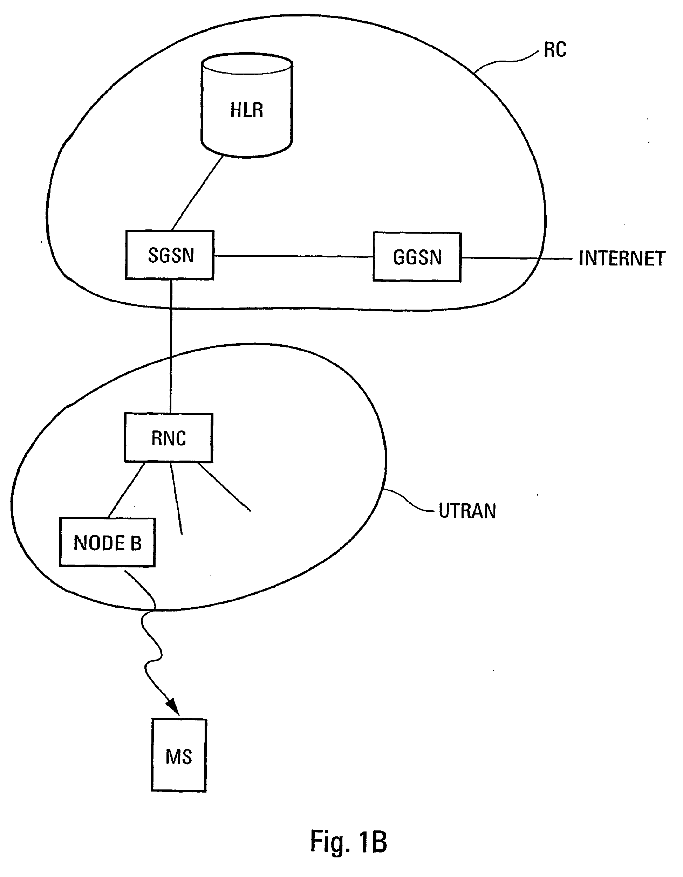

En référence à la figure 1B, concernant la partie réseau d'accès, appelée UTRAN pour le standard UMTS, de nouvelles stations de base, appelées Node B, sont prévus pour remplacer les BTS du GPRS, et des contrôleurs de station de base, dénommés RNC, de capacité accrue, sont prévus pour remplacer les BSC.

Quant au réseau coeur RC dans le cadre de l'UMTS, il sauvegarde pratiquement les éléments constitutifs du GPRS, tout en faisant évoluer les noeuds de service SGSN et GGSN. Le HLR évolue également du fait de l'introduction de nouveaux profils utilisateurs.

En Release 99, tous les services sont supportés par quatre classes de trafic normalisées comme suit : "Conversational", "Streaming", "Interactive" et "Background".

Les classes "Conversational" et "Streaming" sont principalement prévues pour transporter des flux temps réel comme de la voix ou de la vidéo. Toutefois, pour la classe "Streaming", correspondant à une utilisation du type un utilisateur regardant (ou écoutant) un flux vidéo (audio) temps réel, la contrainte sur les délais de transfert de données est plus faible que pour la classe Conversational.

Les classes "Interactive" et "Background" correspondant à des services non temps réel et sont quant à elles prévues pour être utilisées dans le cadre d'applications Internet traditionnelles telles que la navigation, le courrier électronique, les application FTP. Ces dernières classes étant non temps réel, elles offrent un bien meilleur taux d'erreurs grâce à des procédés de retransmission et de codage.

On a vu que l'invention se rapportait plus particulièrement au domaine de la gestion de la qualité de service ou QoS, dans des réseaux GPRS ou UMTS. Aussi, il apparaît nécessaire à ce stade de rappeler les principaux paramètres de QoS.

Les paramètres de QoS du service support GPRS ou UMTS décrivent le service rendu par le réseau UMTS à l'utilisateur du service support. Le profil QoS, formé par l'ensemble des paramètres QoS, spécifie ce service. Ce sont donc des paramètres normalisés permettant de définir les caractéristiques principales d'un flux de données sur le réseau, notamment en terme de débit, de type de trafic, de priorité, etc... Ces paramètres de QoS sont liés à un type de flux souscrit par l'abonné. Si l'abonné souscrit à plusieurs flux différents, il a plusieurs profils de QoS. Ces données sont stockées dans le profil de l'abonné dans le HLR et transmises, grâce à différentes procédures, aux entités suivantes: SGSN, GGSN et BSS/RNC.

Le profil QoS d'un abonné correspond en fait à la limite haute autorisée par rapport aux valeurs spécifiques demandées par l'abonné. Le profil QoS peut aussi correspondre à un profil par défaut configuré par l'opérateur.

Parmi ces paramètres de QoS qui sont spécifiés dans un profil QoS, on trouve principalement :
- "Allocation Retention Priority" : ce paramètre ARP indique la priorité de l'abonné. Il peut prendre les valeurs 1 (haute priorité) à 3 (basse priorité). Il est renseigné au HLR pour chaque contexte PDP souscrit par un abonné. Il est défini comme une priorité pour l'allocation/conservation des ressources radio.
   Il est à noter que dans 1e cadre du service support GPRS, ce paramètre n'est pas transmis au BSS, il n'est ainsi disponible qu'au niveau des noeuds de service SGSN et GGSN.
   Par contre, dans le cadre du service support UMTS, il est utilisé dans le SGSN, le GGSN et le RNC de l'UTRAN pour donner, entre autre, une priorité à l'activation d'un contexte PDP. Dans le RNC, le paramètre ARP se compose de quatre sous-paramètres : "Priority Level", "Pre-emption Capability", "Pre-emption Vulnerability" et "Queuing allowed". C'est le SGSN qui, sur réception de ce paramètre ARP venant du HLR, donne les valeurs aux sous paramètres. C'est alors le sous-paramètres "Priority Level" qui indique la priorité de l'abonné.
- "Precedence Class": ce paramètre QoS, défini initialement dans la Release 97, indique la priorité d'un abonné lorsqu'il est utilisé. Il peut prendre les mêmes valeurs que le paramètre "Allocation Retention Priority" (ARP).
   Ainsi, les paramètres précédemment définis "Precedence Class" et "Allocation Retention Priority" (ou son sous-paramètre "Priority Level") concernent de la même façon une information correspondant au niveau de priorité de l'abonné.
- "Traffic Class": ce paramètre QoS indique la priorité liée au type de service. Comme on l'a vu, en Release 99, tous les services sont supportés par quatre classes de trafic. Aussi, ce paramètre de QoS peut prendre les valeurs "Conversational" (haute priorité, puisque l'exigence de temps réel est très importante), "Streaming", "Interactive" et "Background" (basse priorité).
- "Traffic Handling Priority" (THP): ce paramètre QoS permet de préciser le niveau de priorité pour la classe de trafic "Interactive". Ce paramètre peut prendre trois valeurs.

Parmi ces paramètres, on peut encore citer, à titre informatif, car non utilisés dans le cadre de la présente invention :
- "Transfert delay": ce paramètre QoS donne le délai maximum lors du transfert d'un paquet. Il est utilisé pour les services prioritaires seulement.
- "Guaranteed bit rate": ce paramètre QoS indique le débit lors du transfert d'un paquet. Il est utilisé pour les services temps réel seulement.
- "Maximum bit rate": ce paramètre QoS indique le débit maximum.

L'ensemble des paramètres de QoS précités sont définis dans le cadre de la norme de télécommunication 3GPP. Toutefois, leur utilisation n'est pas normalisée.

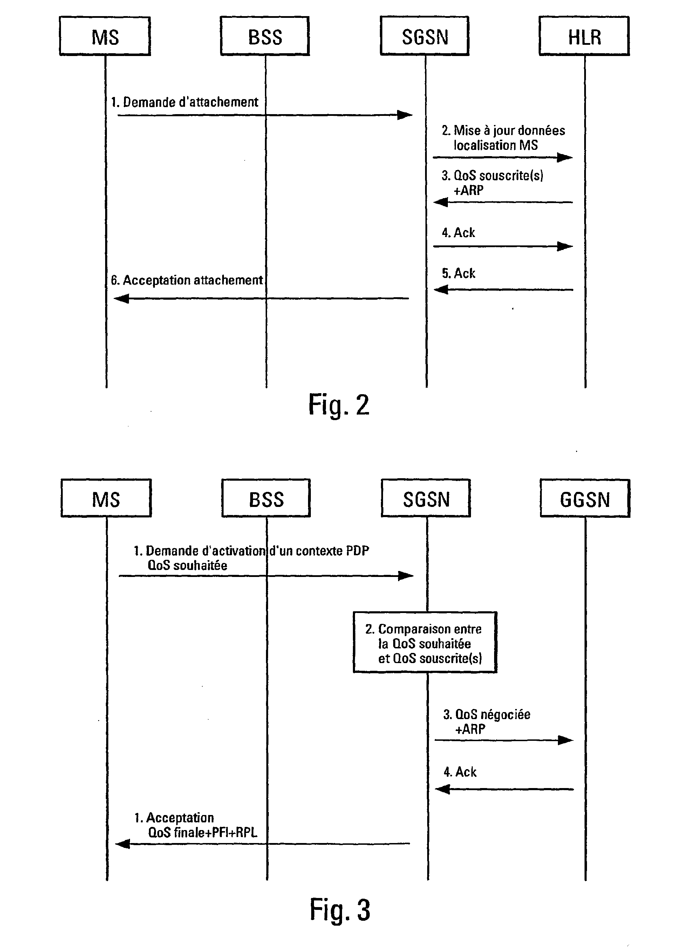

Considérons maintenant les principales procédures mises en oeuvre pour accéder au service GPRS. Ces procédures sont décrites en référence aux figures 2 et 3. Les procédures qui sont décrites ci-dessous permettent au mobile de s'attacher au réseau, de réserver des ressources dans le réseau coeur, d'échanger les paramètres de QoS entre les entités et enfin, d'établir le canal radio. Une fois toutes ces procédures réalisées, il est possible à l'abonné d'envoyer ou de recevoir des données via le réseau GPRS.

Ainsi, pour accéder au service GPRS, un terminal mobile MS doit tout d'abord s'attacher au réseau par une procédure dite d'attachement au réseau, décrite en référence à la figure 2. Cette procédure intervient lorsque l'abonné entre sous la couverture du réseau GPRS, par exemple lorsqu'il allume son terminal mobile. Cette procédure permet d'établir un lien logique entre le terminal mobile MS et le noeud de service SGSN.

Dans une première étape, le terminal MS demande la possibilité de s'attacher au réseau GPRS. Cette demande se fait via le BSS et le SGSN local et comprend des données permettant la localisation du terminal, en particulier le numéro IMSI.

Dans une deuxième étape, un protocole d'échange, appelé protocole MAP, est mis en oeuvre entre le SGSN et le HLR. Le SGSN transmet notamment au HLR une mise à jour des données de localisation du terminal mobile MS.

En retour, dans une troisième étape, le HLR, grâce à la mise à jour des données de localisation reçue, transfert au SGSN les données d'abonné décrivant le(s) service(s) au(x)quel(s) a droit l'abonné, avec en particulier la (ou les) QoS souscrite(s) par l'abonné (si celui-ci a souscrit a plusieurs services), et le(s) paramètre(s) ARP.

Dans une quatrième et cinquième étape, chaque entité SGSN et HLR envoie respectivement un accusé de réception à destination de l'autre entité, mettant fin au protocole d'échange de données entre ces entités pour l'attachement du terminal MS au réseau.

Enfin, le SGSN envoie au terminal MS via le BSS une acceptation d'attachement.

Une procédure de création d'un contexte PDP, consistant en la création d'une session paquet, est décrite en référence à la figure 3. Elle permet au terminal mobile de demander la mémorisation d'un contexte PDP dans le SGSN et GGSN et ainsi de réserver des ressources dans le réseau coeur pour l'exécution du service souhaité par l'abonné. Un contexte PDP est un ensemble d'informations qui caractérise un service de transmission de base. Il regroupe des paramètres qui permettent à un abonné de communiquer avec une adresse PDP définie, selon un protocole spécifique et suivant un profil de qualité de service déterminé (débit, délai, priorité...).

Cette procédure a donc lieu lorsque l'abonné souhaite envoyer ou recevoir des données sur le réseau GPRS pour l'exécution d'un service auquel il a souscrit. Elle est déclenchée à l'initiative de l'abonné mobile, et permet au terminal d'être connu du noeud de service GGSN qui réalise l'interconnexion avec le réseau externe demandé par l'abonné GPRS. A l'issue de cette procédure d'activation d'un contexte PDP, le profil de qualité de service correspondant est échangé entre les différents noeuds du réseau et la transmission de données entre le réseau GPRS et le réseau externe correspondant au service demandé par l'abonné peut alors débuter.

Cette procédure met plus particulièrement en oeuvre le protocole GTP. Dans une première étape, le terminal mobile MS demande la création d'un tunnel GTP dans le réseau coeur à travers lequel les données seront transmises. Lors de cette demande, il spécifie la QoS souhaitée pour ce tunnel.

Le SGSN effectue alors le contrôle d'admission. Pour ce faire, il compare la QoS souhaitée avec la (ou l'une des) QoS souscrite(s) qu'il a reçu lors de la procédure d'attachement du mobile au réseau. Si la QoS demandée par l'abonné dépasse celle souscrite, le SGSN a la possibilité de refuser ou de modifier la demande de création de tunnel, en fonction d'un contrôle permettant de déterminer si les ressources demandées sont disponibles ou pas au niveau du SGSN.

Dans une troisième étape, le SGSN relaie la demande de création de tunnel au GGSN avec les paramètres de QoS issus du contrôle effectué par le SGSN. On parle alors de QoS négociée. Le paramètre ARP est également transmis au GGSN par le SGSN au cours de cette étape.

Le GGSN effectue également dans une quatrième étape un contrôle d'admission. Ce contrôle permet de déterminer en fonction des attributs de QoS négociée si les ressources demandées sont disponibles ou pas au niveau du GGSN. Si tel est le cas, alors la fonction d'admission réserve les ressources correspondantes, et le GGSN acquitte la demande du mobile.

Dans une cinquième étape, le SGSN accepte la demande du mobile et lui envoie la QoS finale, le paramètre PFI ainsi que le paramètre RPL.

A la fin de cette procédure de création du contexte PDP, un tunnel GPRS est établi entre le SGSN et le GGSN prenant en compte les paramètres de QoS négociés avec l'abonné.

Une procédure dite de "Packet Flow Context" consiste alors à transférer du SGSN vers le BSS les paramètres de QoS liés à un transfert de données. L'ensemble des données stockées au niveau du BSS est normalisé sous le nom "Packet Flow Context" ou PFC et sera identifié par le PFI dans les différents messages échangés avec le BSS.

Le PFC comprend entre autres les paramètres de QoS suivants : "Precedence Class", "Traffic Class", "Traffic handling Priority", "Guaranteed Bit Rate" et "Maximum Bit Rate". Le paramètre ARP n'est quant à lui pas stocké au niveau du BSS.

Enfin, une procédure particulière dite d'établissement de TBF est mise en oeuvre pour l'établissement du canal radio dont doit disposer l'abonné afin d'envoyer ou de recevoir des données. La procédure d'établissement de TBF a lieu lorsque le terminal MS ou le BSS doit transmettre des données sur l'interface radio et qu'aucun canal entre le mobile donné et le BSS n'existe encore. On parle de TBF montant lorsque les données sont transmises du mobile vers le réseau et de TBF descendant dans le sens réseau vers mobile. Les caractéristiques du canal radio dépendent des paramètres de QoS liés à l'abonné et au service correspondant au flux de données.

Considérons maintenant la procédure d'activation d'un contexte PDP dans le cadre du service support UMTS.

Comme dans le cadre du GPRS, lors de l'activation d'un contexte PDP, les différents noeuds du réseau UMTS reçoivent les informations de qualité de service définies en fonction du contexte PDP demandé et des données d'abonné stockées au HLR et décrivant les services auxquels a droit l'abonné, avec en particulier la QoS souscrite et le paramètre ARP.

L'information correspondant au niveau de priorité de l'abonné, c'est-à-dire le paramètre ARP contenu dans les données définissant le(s) contexte(s) PDP souscrit(s) par l'abonné, est transmise au SGSN lors de la mise à jour de localisation de l'abonné. Cette information est ensuite transmise au GGSN lors de l'activation d'un contexte PDP par l'abonné, puis au RNC.

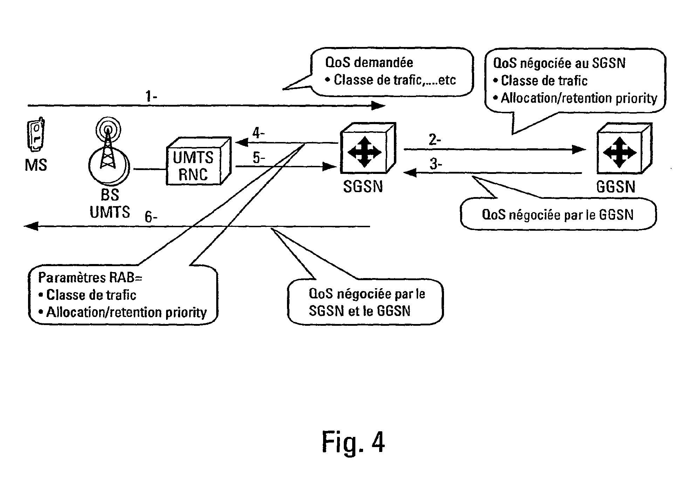

Cette procédure est décrite plus en détail en référence à la figure 4.

Dans une première étape, le mobile MS demande l'activation d'un contexte PDP à son SGSN d'attache en précisant la QoS souhaitée. Le SGSN peut modifier la QoS souhaitée en fonction des données de souscription de l'abonné notamment. On parle alors à ce stade de QoS négociée.

Dans des deuxième et troisième étapes, le SGSN envoie la demande au GGSN avec la QoS négociée. Le GGSN peut lui aussi re-modifier ou refuser la QoS et la QoS ainsi négociée par le GGSN est renvoyée au SGSN.

Dans des quatrième et cinquième étapes, le SGSN demande au RNC d'allouer les ressources nécessaires en décrivant la QoS sous forme de paramètres RAB. Ces paramètres comprennent notamment la classe de trafic concernée et le paramètre ARP. Il est à noter que le RNC peut accepter ou rejeter le RAB demandé.

Enfin, une sixième étape consiste à accepter la demande du terminal mobile MS en lui renvoyant la qualité de service négocié sur le réseau.

Il existe toutefois plusieurs goulots d'étranglement possibles dans les réseaux GPRS/UMTS lors de l'établissement et le transfert de données. Il s'agit notamment des équipements SGSN, GGSN et BSS/UTRAN. Chacun d'entre eux possède des ressources limitées, que ce soit en terme de débit disponible, d'espace mémoire ou de charge des processeurs. Il est néanmoins à noter que c'est essentiellement l'accès radio (BSS/UTRAN) qui est le facteur limitant pour le transfert de données sur de tels réseaux.

Ainsi, dans un contexte de réduction des coûts, l'optimisation des ressources réseau et surtout radio, devient primordiale pour définir une couverture radio dont la capacité est adaptée à différents trafics à supporter dont les besoins en bande passante et en qualité de service sont très différents les uns des autres. Notamment, comme on l'a vu, l'introduction du trafic Internet nécessite de déployer des réseaux adaptés à la fois au trafic de voix et au trafic de données temps réel ou non.

C'est pourquoi, l'amélioration de la gestion de qualité de service tend à devenir une préoccupation majeure pour tenir compte des contraintes du réseau mobile et augmenter son efficacité. De plus, comme la qualité de service perçue a une incidence importante sur la satisfaction des abonnés, la capacité à pouvoir assurer une bonne gestion de la qualité de service sera vue comme un facteur important de différentiation entre les divers opérateurs GPRS/UMTS.

Un mécanisme simple de gestion de qualité de service lorsque l'un des équipements du réseau est en surcharge, pourrait consister en une approche du type "premier arrivé, premier servi". Mais une telle approche n'est évidemment pas satisfaisante pour un opérateur mobile, car elle ne prend en compte ni le profil de l'abonné, ni le type de service demandé. L'utilisation des paramètres de QoS tels que définis plus haut dans la description a alors été envisagée.

Or, la gestion de la qualité de service basée sur l'utilisation des paramètres de QoS dans les réseaux GPRS ou UMTS telle qu'elle est appliquée à l'heure actuelle, n'est pas satisfaisante. Notamment, si les paramètres de QoS en tant que tels sont normalisés, leur utilisation elle, ne l'est pas. L'utilisation de ces paramètres de QoS dans le réseau résulte en effet de choix d'implémentation effectués par les constructeurs des différents éléments constitutifs du réseau que sont les SGSN, GGSN et BSC/RNC.

De ce fait, certaines implémentions existent au niveau des éléments de réseau GPRS/UMTS, qui proposent un traitement basé sur certains des paramètres de QoS seulement. Le traitement choisi par les constructeurs pour la gestion des paramètres de QoS peut être un traitement lié au service demandé par l'abonné, dans le but de favoriser, en cas de surcharge du réseau, l'accès aux ressources aux applications les plus contraignantes en terme de QoS, typiquement les applications temps réel ou multimédia. Cette différentiation se fait principalement à partir des paramètres de QoS liés au service, "Traffic Class" et "Traffic Handling Priority", qui sont disponibles, dans le cadre des réseaux GPRS/UMTS, dans le SGSN, le GGSN et le BSS/RNC, lors de l'activation d'un contexte PDP.

Il est également connu de favoriser l'accès aux ressources en cas de surcharge du réseau pour des abonnés particuliers. Cette différentiation se fait à partir d'un paramètre de QoS correspondant à un niveau de priorité de l'abonné. Dans le cadre du réseau GPRS, cette différentiation peut par exemple se faire à partir du paramètre ARP pour le SGSN et le GGSN, et à partir du paramètre "Precedence Class" dans le BSS, tandis que dans le cadre du réseau UMTS, cette différentiation peut par exemple se faire à partir du paramètre ARP pour le SGSN et le GGSN, et à partir du groupe de paramètres ARP ("Priority Level", "Pre-emption Capability", "Pre-emption Vulnerability" et "Queuing Allowed") dans le RNC.

Ainsi, dans toutes ces implémentations, le traitement lié à ces paramètres de QoS est réalisé linéairement, c'est-à-dire l'un après l'autre. Il y a donc en conséquence une gestion de la qualité de service, soit en fonction du service, si les paramètres de QoS pris en compte au niveau de chaque noeud du réseau GPRS/UMTS sont principalement liés au service, soit en fonction de l'abonné, si les paramètres de QoS pris en compte au niveau de chaque noeud du réseau GPRS/CTMTS sont principalement liés à l'abonné.

La gestion actuelle de la qualité de service dans les réseaux GPRS/UMTS présente donc une limitation importante puisqu'elle ne permet pas, par exemple, de favoriser l'accès aux ressources aux applications temps réel, tout en préservant des ressources d'applications non temps réel pour des abonnés prioritaires.

Le document WO 02/03622 A (10 janvier 2002), qui est considéré comme représentant l'état de la technique le plus pertinent, décrit un système sans fil dans lequel le trafic est classé en fonction de la priorité des abonnés. Les abonnés ayant la même priorité sont classés dans un même groupe de priorité et une partie de la capacité est réservée pour chaque groupe. La différence entre le procédé décrit dans WO 02/03622 A et celui de la revendication 1 est que dans celui de la revendication 1 la priorité accordée pour la transmission est faite en fonction du niveau de priorité de l'abonné et du type de trafic demandé. Le problème technique résolu par la revendication 1 eu égard au document WO 02/03622 A peut se formuler de la manière suivante : comment améliorer le contrôle des ressources d'un opérateur en organisant de manière plus efficace les priorités de transmission ?

Les documents US 6 564 061 B1 et GUO Y ET AL: "CLASS-BASED QUALITY OF SERVICE OVER AIR INTERFACES IN 4G MOBILE NETWORKS" IEEE COMMUNICATIONS MAGAZINE, IEEE SERVICE CENTER. PISCATAWAY, N.J, US, vol. 40, no. 3, mars 2002 (2002-03), pages 132-137 décrivent les modifications de la qualité de service dans un réseau UMTS lorsqu'il y a congestion. Une élasticité est associée à chaque qualité de service. Celle-ci sert à fixer les limites de modification de la qualité de service en case de congestion. Ainsi, les abonnés de catégorie importante pourront avoir une élasticité faible, c'est à dire permettant peu de variation par rapport à la qualité de service souscrite. La différence avec la revendication 1 est que l'élasticité est associée à une qualité de service et non à une catégorie d'abonnée.

La présente invention a pour but de remédier à ces inconvénients en proposant un procédé permettant d'affiner la gestion de la qualité de service dans les réseaux de communication mobile utilisant la commutation de paquets tels que les réseaux GPRS/UMTS, en tenant compte de la nécessité de gérer la répartition des ressources sur le réseau entre les services et les abonnées.

Cet objectif est atteint par la prévision d'un procédé de gestion de la qualité de service, permettant d'effectuer une différentiation de la qualité de service sur le réseau en cas de surcharge de celui-ci, basée sur une prise en compte combinée de paramètres de QoS liés au type de service et à l'abonné.

A cette fin, l'invention concerne un procédé de gestion de la qualité de service dans un réseau de communication mobile en mode paquets, caractérisé en ce que, pour l'exécution d'un service par un abonné du réseau à laquelle correspond un flux de données, il comprend une étape consistant à déterminer un niveau de priorité global associé au flux de données en fonction d'au moins un paramètre de qualité de service correspondant à un niveau de priorité de l'abonné et d'au moins un paramètre de qualité de service lié au type de service.

Avantageusement, le procédé selon l'invention comprend une étape consistant à déterminer, en fonction dudit niveau de priorité global, au moins un traitement de qualité de service à appliquer au flux de données.

De préférence, le procédé comprend une étape consistant, en cas de surcharge du réseau, à appliquer le traitement de qualité de service au flux de données, en tenant compte du niveau de priorité global associé à ce flux de données et des niveaux de priorité globaux associés à des flux de données correspondant à d'autres abonnés présents dans le réseau.

Selon un mode de réalisation, la détermination du niveau de priorité global associé à un flux de données s'effectue sur la base d'une table spécifiant, pour chaque combinaison des deux paramètres de qualité de service correspondant respectivement à un niveau de priorité de l'abonné et à un type de service, une valeur de niveau de priorité global.

De préférence, le réseau étant géré par un opérateur, les niveaux de priorité globaux sont configurables par ledit opérateur du réseau.

De préférence, le réseau mobile comprenant un réseau coeur et un réseau d'accès, il est mis en oeuvre par l'un au moins des noeuds du groupe comprenant un noeud de service du réseau coeur assurant la gestion du lien de communication avec un réseau d'accès, un noeud de service du réseau coeur assurant l'interconnexion avec un réseau externe et un noeud de gestion des ressources radio du réseau accès.

De préférence, le paramètre de qualité de service correspondant au niveau de priorité de l'abonné utilisé pour la détermination du niveau de priorité global (NPG) comprend l'un des paramètres du groupe comprenant:
- le paramètre de qualité de service "Allocation Retention Priority",
- le sous-paramètre "Priority Level" du paramètre de qualité de service "Allocation Retention Priority",
- le paramètre de qualité de service "Precedence Class",
lesdits sous-paramètres et paramètres de qualité de service étant définis dans le cadre de la norme de télécommunication 3GPP.

De préférence, le paramètre de qualité de service lié au type de service utilisé pour la détermination du niveau de priorité global (NPG) comprend le paramètre de qualité de service "Traffic Class", défini dans le cadre de la norme de télécommunication 3GPP.

Dans une variante, le paramètre de qualité de service lié au type de service utilisé pour la détermination du niveau de priorité global (NPG) comprend en outre le paramètre de qualité de service "Traffic Handling Priority", défini dans le cadre de la norme de télécommunication 3GPP pour associer un niveau de priorité sur le réseau au flux de données lorsque ce dernier correspond à un service de type interactif.

L'invention concerne encore un dispositif pour la mise en oeuvre du procédé de l'invention, agencé, pour l'exécution d'un service par un abonné du réseau à laquelle correspond un flux de données, pour déterminer un niveau de priorité global associé au flux de données en fonction d'au moins un paramètre de qualité de service correspondant à un niveau de priorité de l'abonné et d'au moins un paramètre de qualité de service lié au type de service.

Avantageusement, le dispositif est agencé pour déterminer, en fonction du niveau de priorité global associé à un flux de données, au moins un traitement de qualité de service à appliquer à ce flux de données.

De préférence, le dispositif est agencé pour appliquer à un flux de données un traitement de qualité de service, en tenant compte du niveau de priorité global associé à ce flux de données et des niveaux de priorité globaux associés à des flux de données correspondant à d'autres abonnés présents dans le réseau.

Selon un mode de réalisation, le dispositif est associé à une table de comportement spécifiant une valeur du niveau de priorité global pour chaque combinaison des deux paramètres de qualité de service correspondant respectivement à un niveau de priorité de l'abonné et à un type de service.

Avantageusement, les niveaux de priorité globaux sont configurables par un opérateur du réseau.

L'invention concerne encore un noeud de service d'un réseau coeur assurant la gestion du lien de communication avec un réseau d'accès, conforme au dispositif de l'invention.

L'invention concerne encore un noeud de service d'un réseau coeur assurant l'interconnexion avec un réseau externe, conforme au dispositif de l'invention.

L'invention concerne enfin un noeud de gestion des ressources radio d'un réseau accès, conforme au dispositif de l'invention.

L'invention sera mieux comprise et d'autres particularités et avantages apparaîtront à la lecture de la description qui va suivre, donnée uniquement à titre illustratif et non limitatif, la description faisant référence aux dessins annexés parmi lesquels :
- la figure 1A, qui a déjà été décrite, illustre schématiquement l'architecture d'un réseau GPRS;
- la figure 1B, également déjà décrite, illustre schématiquement l'architecture d'un réseau UMTS;
- la figure 2, également déjà décrite, illustre les principales étapes de la procédure d'attachement du mobile à un réseau de type GPRS;
- 1a figure 3, également déjà décrite, illustre les principales étapes de la procédure d'activation d'un contexte PDP dans le cadre d'un réseau de type GPRS;
- la figure 4, également déjà décrite, illustre les principales étapes de la procédure d'activation d'un contexte PDP dans le cadre d'un réseau de type UMTS;
- la figure 5 illustre un exemple de comportement, dans le cadre du réseau GPRS, du noeud de gestion des ressources radio BSS en fonction d'un niveau de priorité globale déterminé selon l'invention;
- la figure 6 illustre un exemple de comportement, dans le cadre du réseau GPRS, du noeud de service SGSN/GGSN en fonction d'un niveau de priorité globale déterminé selon l'invention.

Dans un premier temps, la description de l'invention sera faite en référence à un réseau de communication mobile de type GPRS. L'application à un réseau UMTS implique quant à elle quelques différences d'implémentation qui apparaîtront plus loin dans la description. Toutefois, le principe de l'invention s'applique d'une façon similaire à chacun des types de réseau précités.

Ainsi, le procédé de l'invention permet d'effectuer une priorisation dans le traitement des flux de données qui est à la fois basée sur les priorités liées au service et à l'abonné. Le fait que cette priorisation tienne compte à la fois de l'abonné et du type de service permet à la fois de rendre certaines catégories d'abonnés prioritaires par rapport à d'autre tout en proposant des services ayant des exigences différentes en terme de débit et de délai. L'opérateur du réseau de communication mobile dispose ainsi d'une grande souplesse pour construire ses offres à destination de ses abonnés.

Pour cela, dans le cadre du réseau de communication mobile GPRS, en cas de surcharge du réseau lors de l'accès aux ressources pour l'exécution d'un service correspondant à un contexte PDP activé, la gestion de qualité de service selon l'invention propose de combiner au moins les paramètres de QoS suivants:
- "Allocation Retention Priority", "Traffic Class" et éventuellement "Traffic Handling Priority" au niveau des noeuds de service SGSN et GGSN du réseau coeur, et
- "Precedence Class", "Traffic Class" et éventuellement "Traffic Handling Priority" au niveau du noeud de gestion des ressources radio BSS du réseau d'accès.

Ainsi, au niveau de chacun des noeuds BSS, SGSN, GGSN du réseau GPRS, la gestion de qualité de service selon l'invention consiste plus généralement à combiner au moins le paramètre de QoS lié à un type de service, comprenant plus particulièrement les paramètres de QoS "Traffic Class" et éventuellement "Traffic Handling Priority", avec au moins le paramètre de qualité de service correspondant à un niveau de priorité de l'abonné, comprenant plus particulièrement le paramètre "Allocation Retention Priority" pour les noeuds de service SGSN et GGSN et le paramètre "Precedence Class" pour le noeud BSS.

En effet, comme on l'a vu plus haut dans la description, dans le cadre du GPRS, le paramètre "Allocation Retention Priority" n'est pas transmis au BSS lors de la procédure PFC consistant à transférer du SGSN vers le BSS les paramètres de QoS liés à un flux de données pour un contexte PDP activé. Aussi, selon un mode de réalisation de l'invention, on utilise au niveau du BSS le paramètre "Precedence Class" qui est quant à lui transféré du SGSN vers le BSS lors de la procédure PFC, lorsqu'il est utilisé. Ce paramètre aura la même valeur que le paramètre "Allocation Retention Priority" et défini de la même façon un niveau de priorité de l'abonné.

Il est également à noter que les paramètres "Traffic Class" et "Traffic Handling Priority" sont étroitement liés, ce dernier ne servant qu'à préciser le niveau de priorité associé à un flux de données lorsque ce dernier correspond à un service de type interactif. Il n'est donc utilisé que lorsque le paramètre de QoS "Traffic Class" prend la valeur Interactive.

Une telle gestion de qualité de service selon l'invention basée sur cette combinaison particulière de paramètres de QoS, permet d'établir plusieurs niveaux de priorité pour le traitement des différents flux de données sur le réseau en cas de surcharge de celui-ci. Ces niveaux de priorité sont avantageusement configurables par l'opérateur du réseau.

A chacun de ces niveaux de priorité configurables est associé, selon l'invention, au moins un traitement de QoS prédéfini pouvant être utilisé par chacun des noeuds du réseau (BSS, SGSN, GGSN) pour différentier l'accès au ressource en cas de surcharge du réseau.

Plusieurs traitements prédéfinis de QoS peuvent être envisagés, par exemple :
- le contrôle d'admission, consistant à vérifier si les ressources sont disponibles pour établir l'appel au niveau du noeud de réseau concerné. Ainsi, en cas de surcharge du réseau et en fonction du niveau de priorité associé au flux de données qui a été déterminée grâce à l'invention, le traitement de contrôle d'admission détermine si la demande doit être acceptée ou non;
- la préemption, consistant en la possibilité de préempter les ressources d'un autre service support d'accès radio (RAB). Ainsi, en cas de surcharge au niveau d'un noeud de réseau, celui-ci se base sur le niveau de priorité déterminé par la combinaison de paramètres de QoS selon l'invention, pour déterminer quels sont les abonnés ayant un niveau de basse priorité et pour les forcer à quitter le réseau;
- l'allocation de ressources différentiée, consistant en cas de surcharge du réseau lors de la demande d'établissement de canal, et pour chaque noeud du réseau concerné, à prendre en compte le niveau de priorité déterminé par la combinaison de paramètres de QoS selon l'invention, pour allouer un débit proportionnel à ce niveau de priorité.

Le tableau ci-dessous décrit une table de comportements donnant un exemple de comportement du BSS dans le cadre du GPRS, pour la gestion de la qualité de service selon l'invention. Dans cet exemple, la table définit neuf niveaux de priorité globale associés chacun à un traitement de qualité de service prédéfini à appliquer par le BSS. La table de comportement identifie donc les traitements de QoS à effectuer par le BSS en fonction d'un niveau de priorité globale pour l'accès aux ressource du réseau, déterminé selon l'invention, en tenant compte à la fois des paramètres de QoS liés au type de service ("Traffic Class"; "Traffic Handling Priority") et à la priorité de l'abonné ("Precedence Class").

Le BSS pourra appliquer ces mécanismes lors de la demande de création de canal radio montant ou descendant.

**Table de comportements au niveau du BSS**

| Niveau de priorité globale | Valeur du paramètre de QoS "Precedence Class" | Valeur du paramètre de QoS "Traffic Class" | Valeur du paramètre de QoS "Traffic Handling Priority" | Traitement de qualité de service à effectuer |
|---|---|---|---|---|
| 1 | 1 | "Conversational" | - | -Allocation de ressource différentiée |
| | | | | -Préemption (sur les niveaux de priorité globale inférieurs) |
| | | | | -Contrôle d'admission |
| 2 | 1 | "Streaming" | - | -Allocation de ressource différentiée |
| | 2 & 3 | "Conversational" | - | -Préemption (sur les niveaux de priorité globale inférieurs) -Contrôle d'admission |
| 3 | 2 & 3 | "Streaming" | - | -Allocation de ressource différentiée |
| | | | | -Préemption (sur les niveaux de priorité globale inférieurs) -Contrôle d'admission |
| 4 | 1 | "Interactive" | 1 & 2 | -Allocation de ressource différentiée |
| | | | | -Préemption (sur les niveaux de priorité globale 7 à 9) -Contrôle d'admission |
| 5 | 1 | "Interactive" | 3 | -Allocation de ressource différentiée |
| | 2 & 3 | "Interactive" | 1 | -Préemption (sur les niveaux de priorité globale 7 à 9) -Contrôle d'admission |
| 6 | 2 & 3 | "interactive" | 2 & 3 | -Allocation de ressource différentiée -Contrôle d'admission |
| 7 | 1 | "Background" | - | -Allocation de ressource différentiée |
| | | | | -Contrôle d'admission |
| 8 | 2 | "background" | - | -Allocation de ressource différentiée |
| | | | | -Contrôle d'admission |
| 9 | 3 | "background" | - | -Allocation de ressource différentiée |
| | | | | -Contrôle d'admission |

Dans cet exemple, l'objectif est de créer une classe d'abonné dite Premium, correspondant à une valeur du paramètre de "Precedence" égale à 1, tout en scindant le traitement des services entre temps réels (services supportés par les classes de trafic "Conversational" et "Streaming") et non temps réel (services supportés par les classes de trafic "Interactive" et "Background").

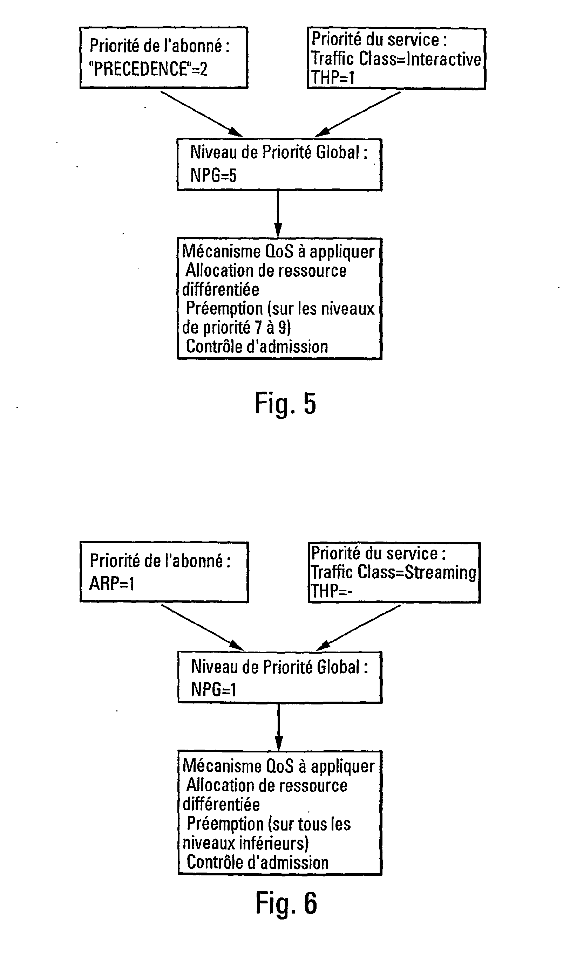

La figure 5 illustre alors un comportement du BSS en référence à la table de comportements ci-dessus. Dans cet exemple, l'accès au ressource demandé correspond à un profil de QoS stocké au niveau du BSS, lequel profil est identifié par l'intermédiaire du paramètre PFI et dans lequel le paramètre "Precedence Class" a la valeur "2" tandis que les paramètres "Traffic Class" et "Traffic Handling Priority" (THP) ont respectivement les valeurs "Interactive" et "1". Selon l'invention, la combinaison de ces paramètres de QoS correspondant respectivement à un niveau de priorité de l'abonné et à un niveau de priorité lié au type de service, permet de déterminer un niveau de priorité global NPG égal à 5 dans cet exemple.

En fonction de ce niveau de priorité global égal à 5, le BSS devra donc appliquer les traitements de QoS prédéfinis suivants :
- allocation de ressource différentiée,
- préemption sur les niveaux de priorité globaux 7 à 9, et
- contrôle d'admission.

Au niveau des noeuds de service SGSN et GGSN, la table ci-dessous décrit un exemple de comportement de ces noeuds pour la gestion de la qualité de service selon l'invention. Cette table définit cinq niveaux de priorité globaux. La table identifie donc les traitements de QoS à effectuer par le SGSN et le GGSN en fonction du niveau de priorité global déterminé selon l'invention en tenant compte à la fois des paramètres de QoS liés au type de service ("Traffic Class"; "Traffic Handling Priority") et à la priorité de l'abonné ("Allocation Retention Priority"). Au niveau de ces noeuds, le paramètre de QoS correspondant à un niveau de priorité de l'abonné est le paramètre "Allocation Retention Priority" (ARP), et non plus le paramètre "Precedence" comme pour le BSS.

En fonction du niveau de priorité global, les noeuds SGSN et GGSN devront appliquer les traitements de QoS identifiés dans la table. Le SGSN pourra appliquer ces traitements lors de la demande de création du contexte PDP.

**Table de comportements au niveau du SGSN/GGSN**

| Niveau de priorité globale | Valeur du paramètre de QoS "Allocation Retention Priority" (ARP) | Valeur du paramètre de QoS "Traffic Class" | Valeur du paramètre de QoS "Traffic Handling Priority" | Traitement à effectuer |
|---|---|---|---|---|
| 1 | 1 | "Conversational" & "Streaming" | - | -Allocation de ressource différentiée |
| | | | | -Préemption (sur les niveaux de priorité globale inférieurs) |
| | | | | -Contrôle d'admission |
| 2 | 2 & 3 | "Conversational" & "Streaming" | - | -Allocation de ressource différentiée |
| | | | | -Préemption (sur les niveaux de priorité globale 4 et inférieurs) |
| | | | | -Contrôle d'admission |
| 3 | 1 | "Interactive" | 1 à 3 | -Allocation de ressource différentiée |
| | | | | -Contrôle d'admission |
| 4 | 2 | "Interactive" | 1 à 3 | -Allocation de ressource différentiée |
| | 3 | "Interactive" | 1 | -Contrôle d'admission |
| 5 | 1 à 3 | "Background" | - | -Allocation de ressource différentiée |
| | 3 | "Interactive" | 2 & 3 | -Contrôle d'admission |

Dans cet exemple, l'objectif est de privilégier fortement les abonnés de priorité la plus haute, c'est-à-dire ceux dont le paramètre ARP est égal à 1, qui peuvent ainsi préempter tous les autres abonnés pour leur service temps réel, c'est-à-dire les services supportés par les classes de trafic "Conversational" et "Streaming".

La figure 6 illustre alors un comportement du SGSN/GGSN en référence à la table ci-dessus. Dans cet exemple, l'accès au ressource demandé correspond à un profil de QoS stocké au niveau du SGSN/GGSN, dans lequel le paramètre ARP a la valeur "1" tandis que le paramètre "Traffic Class" a la valeur "Streaming", le paramètre "Traffic Handling Priority" (THP) n'étant pas utilisé. Selon l'invention, la combinaison de ces paramètres de QoS correspondant respectivement à un niveau de priorité de l'abonné et à un niveau de priorité lié au type de service, permet de déterminer un niveau de priorité global NPG égal à 1 dans cet exemple.

En fonction de ce niveau de priorité global égal à 1, le SGSN/GGSN devra donc appliquer les traitements de QoS prédéfinis suivants :
- allocation de ressource différentiée,
- préemption sur tous les niveaux de priorité globaux inférieurs 9, et
- contrôle d'admission.

Concrètement, au niveau de chaque noeud BSS, SGSN, GGSN du réseau, l'exploitation des données des tables données en exemple est obtenue par un algorithme de différenciation de la qualité de service mis en oeuvre pour l'application du traitement de qualité de service prédéfini. Cet algorithme prend donc en entrée les valeurs de paramètre de QoS liés au type de service et à l'abonné et fournit en sortie le traitement de QoS devant être appliqué par le noeud concerné en fonction d'une combinaison desdits paramètres de QoS.

Il est à noter que dans les figures 5 et 6, les niveaux de priorité globaux déterminés par la combinaison particulière des paramètres de QoS correspondant d'une part, à un niveau de priorité lié au type de service et, d'autre part, à un niveau de priorité de l'abonné, de même que les traitements de QoS à appliquer en conséquence, sont uniquement donnés à titre d'exemple de réalisation. D'autres choix de configuration peuvent bien entendu être envisagés en fonction de la stratégie de gestion de la qualité de service choisie par l'opérateur sur son réseau, sans pour autant sortir du cadre de la présente invention.

Considérons maintenant l'application de l'invention à un réseau de communication mobile de type UMTS. En cas de surcharge du réseau lors de l'accès aux ressources pour l'exécution d'un service correspondant à un contexte PDP activé, la gestion de qualité de service selon l'invention dans le cadre de l'UMTS propose de combiner au moins les paramètres de QoS suivants:
- "Allocation Retention Priority", "Traffic Class" et éventuellement "Traffic Handling Priority" au niveau des noeuds de service SGSN et GGSN du réseau coeur, et
- "Priority Level", "Pre-emption Capability" "Pre-emption Vulnerability", "Queuing Allowed" "Traffic Class" et éventuellement "Traffic Handling Priority" au niveau du noeud de gestion des ressources radio RNC du réseau d'accès.

Ainsi, au niveau de chacun des noeuds RNC, SGSN, GGSN du réseau UMTS, la gestion de qualité de service selon l'invention consiste plus généralement à combiner au moins le paramètre de QoS lié au type de service, comprenant plus particulièrement les paramètres de QoS "Traffic Class" et éventuellement "Traffic Handling Priority", avec au moins le paramètre de qualité de service correspondant à un niveau de priorité de l'abonné, comprenant le paramètre "Allocation Retention Priority" pour les noeuds de service SGSN et GGSN et plus particulièrement le sous-paramètre "Priority Level" du paramètre "Allocation Retention Priority", pour le noeud RNC.

En effet, dans l'UTRAN, le paramètre "Allocation Retention Priority" (ARP) se compose des quatre sous-paramètres : "Priority Level", "Pre-emption Capability" "Pre-emption Vulnerability" et "Queuing Allowed". C'est le SGSN qui, sur réception du paramètre ARP venant du HLR, donne les valeurs aux sous-paramètres. L'ARP est bien envoyé au GGSN lors de la procédure de création du contexte PDP, en revanche, ce sont les quatre sous-paramètres qui sont envoyés au RNC et c'est en particulier le sous-paramètre "Priority Level" qui sera utilisé dans l'UTRAN au niveau du RNC pour donner un niveau de priorité à l'abonné.

A cette différence d'implémentation près, les principes évoqués plus haut dans l'exemple de réalisation appliqué à un réseau de type GPRS demeurent inchangés.

Prenons l'exemple d'un réseau UMTS sur lequel sont définies trois catégories d'abonnés :
- Catégorie 1 : ARP=1 dans le HLR,
- Catégorie 2 : ARP=2 dans le HLR, et
- Catégorie 3 : ARP =3 dans le HLR.

Dans ce réseau, on souhaite par exemple, en cas de surcharge du réseau au niveau radio, mettre en oeuvre un traitement de QoS prédéfini dans lequel les services non temps réel des abonnés Catégorie 1 préemptent les services non temps réel des abonnés Catégorie 3. Ainsi, au niveau de chaque noeud du réseau, l'algorithme suivant de différentiation de la qualité de service est mis en oeuvre pour l'application au niveau de chaque noeud du traitement de préemption prédéfini :
SI("Traffic Class" = Interactive OU "Traffic Class" = Background) ET (ARP=1)
ALORS PREMPTION ("Traffic Class" = Interactive OU "Traffic Class" = Background) ET (ARP = 3)
ARP s'entend ici comme le paramètre "Allocation Retention Priority" lorsqu'on considère les noeuds SGSN et GGSN, et comme le sous-paramètre "Priority Level" lorsqu'on considère le noeud RNC.

Cet algorithme prend donc en entrée les valeurs de paramètre de QoS liés au type de service ("Traffic Class") et à l'abonné (ARP), et fournit en sortie le traitement de QoS devant être appliqué par le noeud concerné en fonction d'une combinaison desdits paramètres de QoS.

D'autres traitements de QoS prédéfinis peuvent également être envisagés en fonction de la stratégie de gestion de la qualité de service choisie par l'opérateur du réseau UMTS.

Un traitement de QoS peut par exemple consister, en cas de surcharge du réseau, en ce que les services temps réel puissent préempter les ressources des services non temps réel sauf si ces ressources ont été allouées à des abonnés Gold.

L'algorithme suivant de différentiation de la qualité de service est alors mis en oeuvre pour l'application au niveau de chaque noeud de ce traitement de QoS prédéfini :

SI("Traffic Class" = Streaming OU "Traffic Class" = Conversational) ALORS PREMPTION ("Traffic Class" = Interactive OU "Traffic Class" = Background) ET (ARP = 3 OU ARP = 2).

Avantageusement, grâce à l'invention, il devient possible d'assurer l'allocation des ressources nécessaire à la fourniture d'un service convenable pour un abonné dit prioritaire tout en respectant au mieux, en fonction des services, les besoins des autres abonnés. L'invention permet en conséquence une meilleure gestion de la qualité de service en cas de surcharge du réseau, grâce à une prise en compte combinée pour l'allocation des ressources au niveau de chaque noeud du réseau, des paramètres de QoS correspondant à un niveau de priorité lié au type de service et des paramètres de qualité de service correspondant à un niveau de priorité de l'abonné.

### GLOSSAIRE

Ce glossaire présente la liste des acronymes anglo-saxons utilisés dans la présente demande de brevet. Ces acronymes sont définis dans le cadre de la norme de télécommunication 3GPP.
- 3GPP: Third-Generation Partnership project (of ETSI)
- ETSI: European Telecommunications Standards Institute
- GPRS: General Packet Radio Service
- GSM: Global System for Mobile Communication
- UMTS: Universal Mobile Telecommunication System
- IP: Internet protocol
- BTS: Base Transceiver Station
- BSC: Base Station Controller
- BSS: Base Station Subsystem
- HLR: Home Location Register
- SGSN: Serving GPRS Support Node
- GGSN: Gateway GPRS Support Node
- UTRAN: UMTS Terrestrial Radio Access Network
- RNC: Radio Network Controller
- QoS: Quality of Service
- FTP: File Transfert Protocol
- ARP: Allocation Retention Priority
- PDP: Packet Data Protocol
- THP: Traffic Handling Priority
- IMSI: International Mobile Subsciber Identity
- PFC: Packet Flow Context
- PFI: Packet Flow Identifier
- RPL: Radio Priority Level
- TBF: Temporary Block Flow
- RAB: Radio Access Bearer
- GTP: GPRS Tunnelling Protocol
- MAP: Mobile Application Part

## Revendications

1. Procédé de gestion de la qualité de service dans un réseau de communication mobile en mode paquets, **caractérisé en ce que**, pour l'exécution d'un service par un abonné du réseau à laquelle correspond un flux de données, il comprend une étape consistant à déterminer un niveau de priorité global (NPG) associé au flux de données en fonction d'au moins un paramètre de qualité de service correspondant à un niveau de priorité de l'abonné et d'au moins un paramètre de qualité de service lié au type de service.

2. Procédé selon la revendication 1, **caractérisé en ce qu'**il comprend une étape consistant à déterminer, en fonction dudit niveau de priorité global (NPG), au moins un traitement de qualité de service à appliquer au flux de données.

3. Procédé selon la revendication 2, **caractérisé en ce qu'**il comprend une étape consistant, en cas de surcharge du réseau, à appliquer le traitement de qualité de service au flux de données, en tenant compte du niveau de priorité global associé à ce flux de données et des niveaux de priorité globaux associés à des flux de données correspondant à d'autres abonnés présents dans le réseau.

4. Procédé selon l'une des revendications 1 à 3, **caractérisé en ce que** la détermination du niveau de priorité global associé à un flux de données s'effectue sur la base d'une table spécifiant, pour chaque combinaison des deux paramètres de qualité de service correspondant respectivement à un niveau de priorité de l'abonné et à un type de service, une valeur de niveau de priorité global.

5. Procédé selon la revendication 4, **caractérisé en ce que**, le réseau étant géré par un opérateur, les niveaux de priorité globaux sont configurables par ledit opérateur du réseau.

6. Procédé selon l'une des revendications 1 à 5, **caractérisé en ce que**, le réseau mobile comprenant un réseau coeur (RC) et un réseau d'accès (R.A, UTRAN), il est mis en oeuvre par l'un au moins des noeuds du groupe comprenant un noeud de service (SGSN) du réseau coeur assurant la gestion du lien de communication avec un réseau d'accès, un noeud de service (GGSN) du réseau coeur assurant l'interconnexion avec un réseau externe et un noeud de gestion des ressources radio (BSS/RNC) du réseau d'accès.

7. Procédé selon l'une des revendications 1 à 6, **caractérisé en ce que** le paramètre de qualité de service correspondant au niveau de priorité de l'abonné utilisé pour la détermination du niveau de priorité global (NPG) comprend l'un des paramètres du groupe comprenant:
- le paramètre de qualité de service "Allocation Retention Priority",
- le sous-paramètre "Priority Level" du paramètre de qualité de service "Allocation Retention Priority",
- le paramètre de qualité de service "Precedence Class",
lesdits sous-paramètres et paramètres de qualité de service étant définis dans le cadre de la norme de télécommunication 3GPP release 99.

8. Procédé selon l'une des revendications 1 à 7, **caractérisé en ce que** le paramètre de qualité de service lié au type de service utilisé pour la détermination du niveau de priorité global (NPG) comprend le paramètre de qualité de service "Traffic Class", défini dans le cadre de la norme de télécommunication 3GPP release 99.

9. Procédé selon la revendication 8, **caractérisé en ce que** le paramètre de qualité de service lié au type de service utilisé pour la détermination du niveau de priorité global (NPG) comprend en outre le paramètre de qualité de service "Traffic Handling Priority", défini dans le cadre de la norme de télécommunication 3GPP release 99 pour associer un niveau de priorité sur le réseau au flux de données lorsque ce dernier correspond à un service de type interactif.

10. Dispositif pour la mise en oeuvre du procédé de l'une des revendications 1 à 9, agencé, pour l'exécution d'un service par un abonné du réseau à laquelle correspond un flux de données, pour déterminer un niveau de priorité global (NPG) associé au flux de données en fonction d'au moins un paramètre de qualité de service correspondant à un niveau de priorité de l'abonné et d'au moins un paramètre de qualité de service lié au type de service.

11. Dispositif selon la revendication 10, **caractérisé en ce qu'**il est agencé pour déterminer, en fonction du niveau de priorité global (NPG) associé à un flux de données, au moins un traitement de qualité de service à appliquer à ce flux de données.

12. Dispositif selon l'une des revendications 10 et 11, **caractérisé en ce qu'**il est agencé pour appliquer à un flux de données un traitement de qualité de service, en tenant compte du niveau de priorité global associé à ce flux de données et des niveaux de priorité globaux associés à des flux de données correspondant à d'autres abonnés présents dans le réseau.

13. Dispositif selon l'une des revendications 10 à 12, **caractérisé en ce qu'**il est associé à une table de comportement spécifiant une valeur du niveau de priorité global pour chaque combinaison des deux paramètres de qualité de service correspondant respectivement à un niveau de priorité de l'abonné et à un type de service.

14. Dispositif selon l'une des revendications 10 à 13, **caractérisé en ce que** les niveaux de priorité globaux sont configurables par un opérateur du réseau.

15. Noeud de service (SGSN) d'un réseau coeur (RC) assurant la gestion du lien de communication avec un réseau d'accès (RA, UTRAN), comprenant des moyens pour mettre en oeuvre l'une des revendications 1 à 5.

16. Noeud de service (GGSN) d'un réseau coeur (RC) assurant l'interconnexion avec un réseau externe, comprenant des moyens pour mettre en oeuvre l'une des revendications 1 à 5.

17. Noeud de gestion des ressources radio (BSS/RNC) d'un réseau d'accès, comprenant des moyens pour mettre en oeuvre l'une des revendications 1 à 5.

## Claims

1. Method of managing quality of service in a packet mode mobile communication network, **characterized in that**, for the execution of a service by a subscriber of the network to which a data stream corresponds, it comprises a step consisting in determining an overall priority level (OPL) associated with the data stream according to at least one quality of service parameter corresponding to a priority level of the subscriber and at least one quality of service parameter linked to the service type.

2. Method according to Claim 1, **characterized in that** it comprises a step consisting in determining, according to said overall priority level (OPL), at least one quality of service process to be applied to the data stream.

3. Method according to Claim 2, **characterized in that** it comprises a step consisting, in the event of a network overload, in applying the quality of service process to the data stream, taking into account the overall priority level associated with this data stream and overall priority levels associated with data streams corresponding to other subscribers present in the network.

4. Method according to one of Claims 1 to 3, **characterized in that** the determination of the overall priority level associated with a data stream is performed on the basis of a table specifying, for each combination of the two quality of service parameters respectively corresponding to a priority level of the subscriber and to a service type, an overall priority level value.

5. Method according to Claim 4, **characterized in that**, the network being managed by an operator, the overall priority levels are configurable by said network operator.

6. Method according to one of Claims 1 to 5, **characterized in that**, the mobile network comprising a core network (CN) and an access network (AN, UTRAN), it is implemented by at least one of the nodes of the group comprising a service node (SGSN) of the core network handling the management of the communication link with an access network, a service node (GGSN) of the core network handling the interconnection with an external network and a radio resource management node (BSS/RNC) of the access network.

7. Method according to one of Claims 1 to 6, **characterized in that** the quality of service parameter corresponding to the priority level of the subscriber used for determining the overall priority level (OPL) comprises one of the parameters of the group comprising :
- the "allocation retention priority" quality of service parameter,
- the "priority level" subparameter of the "allocation retention priority" quality of service parameter,
- the "precedence class" quality of service parameter,
said subparameters and quality of service parameters being defined in the scope of the 3GPP release 99 telecommunication standard.

8. Method according to one of Claims 1 to 7, **characterized in that** the quality of service parameter linked to the service type used for determining the overall priority level (OPL) comprises the "traffic class" quality of service parameter, defined in the scope of the 3GPP release 99 telecommunication standard.

9. Method according to Claim 8, **characterized in that** the quality of service parameter linked to the service type used for determining the overall priority level (OPL) also comprises the "traffic handling priority" quality of service parameter, defined in the scope of the 3GPP release 99 telecommunication standard, to associate a priority level on the network with the data stream when the latter corresponds to an interactive type service.

10. Device for implementing the method according to one of Claims 1 to 9, arranged, for the execution of a service by a subscriber of the network to which a data stream corresponds, to determine an overall priority level (OPL) associated with the data stream according to at least one quality of service parameter corresponding to a priority level of the subscriber and at least one quality of service parameter linked to the service type.

11. Device according to Claim 10, **characterized in that** it is arranged to determine, according to the overall priority level (OPL) associated with a data stream, at least one quality of service process to be applied to this data stream.

12. Device according to one of Claims 10 and 11, **characterized in that** it is arranged to apply a quality of service process to a data stream, taking into account the overall priority level associated with this data stream and overall priority levels associated with data streams corresponding to other subscribers present in the network.

13. Device according to one of Claims 10 to 12, **characterized in that** it is associated with a behaviour table specifying an overall priority level for each combination of the two quality of service parameters respectively corresponding to a priority level of the subscriber and to a service type.

14. Device according to one of Claims 10 to 13, **characterized in that** the overall priority levels are configurable by a network operator.

15. Service node (SGSN) of a core network (CN) handling the management of a communication link with an access network (AN, UTRAN), comprising means for implementing one of Claims 1 to 5.

16. Service node (GGSN) of a core network (CN) handling the interconnection with an external network, comprising means for implementing one of Claims 1 to 5.

17. Radio resource management node (BSS/RNC) of an access network, comprising means for implementing one of Claims 1 to 5.

## Patentansprüche

1. Verfahren zur Verwaltung der Dienstqualität in einem Paketmodus-Mobilkommunikationsnetz, **dadurch gekennzeichnet, dass** es zur Ausführung eines Diensts durch einen Abonnenten des Netzes, der ein Datenfluss entspricht, einen Schritt aufweist, der darin besteht, eine dem Datenfluss zugeordnete globale Prioritätsebene (NPG) in Abhängigkeit von mindestens einem Dienstqualitätsparameter, der einer Prioritätsebene des Abonnenten entspricht, und von mindestens einem Dienstqualitätsparameter, der mit dem Diensttyp verbunden ist, zu bestimmen.

2. Verfahren nach Anspruch 1, **dadurch gekennzeichnet, dass** es einen Schritt aufweist, der darin besteht, in Abhängigkeit von der globalen Prioritätsebene (NPG) mindestens eine Dienstqualitätsverarbeitung zu bestimmen, die an den Datenfluss anzuwenden ist.

3. Verfahren nach Anspruch 2, **dadurch gekennzeichnet, dass** es einen Schritt aufweist, der im Fall einer Überlastung des Netzes darin besteht, die Dienstqualitätsverarbeitung an den Datenfluss unter Berücksichtigung der diesem Datenfluss zugeordneten globalen Prioritätsebene und der globalen Prioritätsebenen anzuwenden, die Datenflüssen zugeordnet sind, die anderen im Netz vorhandenen Abonnenten entsprechen.

4. Verfahren nach einem der Ansprüche 1 bis 3, **dadurch gekennzeichnet, dass** die Bestimmung der einem Datenfluss zugeordneten globalen Prioritätsebene auf der Basis einer Tabelle erfolgt, die für jede Kombination der beiden Dienstqualitätsparameter, die einer Prioritätsebene des Abonnenten bzw. einem Diensttyp entsprechen, einen globalen Prioriätsebenenwert spezifiziert.

5. Verfahren nach Anspruch 4, **dadurch gekennzeichnet, dass**, da das Netz von einem Betreiber verwaltet wird, die globalen Prioritätsebenen von dem Betreiber des Netzes konfiguriert werden können.

6. Verfahren nach einem der Ansprüche 1 bis 5, **dadurch gekennzeichnet, dass** es, da das Mobilnetz ein Kernnetz (RC) und ein Zugriffsnetz (RA, UTRAN) aufweist, von mindestens einem der Knoten der Gruppe eingesetzt wird, die einen Dienstknoten (SGSN) des Kernnetzes, der die Verwaltung des Kommunikationslinks mit einem Zugriffsnetz gewährleistet, einen Dienstknoten (GGSN) des Kernnetzes, der die Verbindung mit einem externen Netz gewährleistet, und einen Verwaltungsknoten der Funkressourcen (BSS/RNC) des Zugriffsnetzes enthält.

7. Verfahren nach einem der Ansprüche 1 bis 6, **dadurch gekennzeichnet, dass** der Dienstqualitätsparameter, der der Prioritätsebene des Abonnenten entspricht, die für die Bestimmung der globalen Prioritätsebene (NPG) verwendet wird, einen der Parameter der Gruppe aufweist, die enthält:
- den Dienstqualitätsparameter "Allocation Retention Priority",
- den Subparameter "Priority Level" des Dienstqualitätsparameters "Allocation Retention Priority",
- den Dienstqualitätsparameter "Precedence Class",
wobei die Dienstqualitäts-Subparameter und
- Parameter im Rahmen der Telekommunikationsnorm 3GPP Release 99 definiert sind.

8. Verfahren nach einem der Ansprüche 1 bis 7, **dadurch gekennzeichnet, dass** der Dienstqualitätsparameter, der mit dem Diensttyp verbunden ist, der für die Bestimmung der globalen Prioritätsebene (NPG) verwendet wird, den Dienstqualitätsparameter "Traffic Class" enthält, der im Rahmen der Telekommunikationsnorm 3GPP Release 99 definiert ist.

9. Verfahren nach Anspruch 8, **dadurch gekennzeichnet, dass** der Dienstqualitätsparameter, der mit dem Diensttyp verbunden ist, der für die Bestimmung der globalen Prioritätsebene (NPG) verwendet wird, außerdem den Dienstqualitätsparameter "Traffic Handling Priority" enthält, der im Rahmen der Telekommunikationsnorm 3GPP Release 99 definiert ist, um eine Prioritätsebene im Netz dem Datenfluss zuzuordnen, wenn letzterer einem Dienst vom interaktiven Typ entspricht.

10. Vorrichtung zur Anwendung des Verfahrens nach einem der Ansprüche 1 bis 9, die zur Ausführung eines Diensts durch einen Abonnenten des Netzes, der ein Datenfluss entspricht, eingerichtet ist, um eine dem Datenfluss zugeordnete globale Prioritätsebene (NPG) in Abhängigkeit von mindestens einem Dienstqualitätsparameter, der einer Prioritätsebene des Abonnenten entspricht, und von mindestens einem Dienstqualitätsparameter zu bestimmen, der mit dem Diensttyp verbunden ist.

11. Vorrichtung nach Anspruch 10, **dadurch gekennzeichnet, dass** sie eingerichtet ist, um in Abhängigkeit von der einem Datenfluss zugeordneten globalen Prioritätsebene (NPG) mindestens eine Dienstqualitätsverarbeitung zu bestimmen, die an diesen Datenfluss anzuwenden ist.

12. Vorrichtung nach einem der Ansprüche 10 und 11, **dadurch gekennzeichnet, dass** sie eingerichtet ist, um an einen Datenfluss eine Dienstqualitätsverarbeitung unter Berücksichtigung der diesem Datenfluss zugeordneten globalen Prioritätsebene und der globalen Prioritätsebenen anzuwenden, die Datenflüssen zugeordnet sind, die anderen im Netz vorhandenen Abonnenten entsprechen.

13. Vorrichtung nach einem der Ansprüche 10 bis 12, **dadurch gekennzeichnet, dass** sie einer Verhaltenstabelle zugeordnet ist, die für jede Kombination der beiden Dienstqualitätsparameter, die einer Prioritätsebene des Abonnenten bzw. einem Diensttyp entsprechen, einen Wert der globalen Prioritätsebene spezifiziert.

14. Vorrichtung nach einem der Ansprüche 10 bis 13, **dadurch gekennzeichnet, dass** die globalen Prioritätsebenen von einem Betreiber des Netzes konfiguriert werden können.

15. Dienstknoten (SGSN) eines Kernnetzes (RC), der die Verwaltung des Kommunikationslinks mit einem Zugriffsnetz (RA, UTRAN) gewährleistet, mit Mitteln zur Anwendung eines der Ansprüche 1 bis 5.

16. Dienstknoten (GGSN) eines Kernnetzes (RC), der die Verbindung mit einem externen Netz gewährleistet, mit Mitteln zur Anwendung eines der Ansprüche 1 bis 5.

17. Verwaltungsknoten der Funkressourcen (BSS/RNC) eines Zugriffsnetzes, der Mittel zur Anwendung eines der Ansprüche 1 bis 5 aufweist.
